# EUROPEAN PATENT APPLICATION

(11) **EP 4 723 332 A1**
(43) Date of publication of application: **08.04.2026**
(21) Application number: 23939067.7
(22) Date of filing: 29.06.2023
(51) Int. Cl.: H01M 50/244, H01M 50/593, H01M 50/209, H01M 50/289

(54) **SUPPORT ASSEMBLY, WIRE HARNESS INTEGRATED ASSEMBLY, AND BATTERY MODULE**

(30) Priority: 30.05.2023 CN 202321359159 U; 30.05.2023 CN 202310632239
(71) Applicant: Eve Energy Co. Ltd., Huizhou, Guangdong 516000 (CN)
(72) Inventor: YIN, Yihua, Huizhou, Guangdong 516000 (CN)
(74) Representative: Zhu, Puxing
(86) International application number: PCT/CN2023/103586
(87) International publication number: WO 2024/244084

(57) **Abstract**

A support assembly (110), a wire harness integrated assembly (100), and a battery module (10). The support assembly (110) comprises an insulating plate (111) and a positioning support (112); the insulating plate (111) is provided with a mounting surface (1111), a first relief hole (1112) is provided on the insulating plate, and the insulating plate (111) has two opposite side surfaces (1113) in a first direction (X); the positioning support (112) is provided on the side of the insulating plate (111) facing away from the mounting surface (1111), a second relief hole (1121) is provided on the positioning support (112), and the positioning support (112) extends to a side surface of the insulating plate (111) in the first direction and is provided with a barrier portion (1122) so as to separate a connecting assembly (120) and an end plate (300).

## Description

### CROSS-REFERENCE TO RELATED APPLICATION

The invention claims the benefit of priority of Chinese Patent Applications 202310632239.X and 202321359159.3 filled on May 30, 2023, with the China National Intellectual Property Administration, the contents of which are incorporated herein by reference in their entirety.

### TECHNICAL FIELD

The invention relates to the technical field of battery technology, and more particularly, to a bracket assembly, a wiring harness integration assembly, and a battery module.

### BACKGROUND

A battery module is a power unit of a new energy power supply system, which is mainly composed of cells, connecting assemblies, acquisition wiring harness for signal sampling, bracket assemblies, and the like.

One battery module includes a plurality of cells, and a connecting member is welded to a top surface of a pole of each cell to realize series or parallel connection among the cells. The bracket assembly is used to separate the cells from the connecting assemblies and the acquisition wiring harness to protect the battery module.

In the related arts, when a bracket assembly in a battery module is used to install and fix the connecting assemblies, electrical safety problems are easily to occur between the connecting assemblies and end plates in the battery module, thereby affecting the performance of the battery module.

### SUMMARY

The invention provides a bracket assembly, a wiring harness integration assembly, and a battery module, which can solve problems of poor electrical safety between the connecting assemblies installed on the bracket assembly and end plates in the battery module.

For this purpose, the invention adopts the following technical solutions:
According to a first aspect, embodiments of the invention provide a bracket assembly configured to install a battery module. The battery module includes two end plates disposed opposite to each other along a first direction, cells and connecting assemblies electrically connected to the cells, and the cells are disposed between the two end plates.

The bracket assembly includes:
an insulation plate having an installation surface configured to install the connecting assemblies, the insulation plate is provided with one or more first avoidance holes, and the one or more first avoidance holes are configured to penetrate through the installation surface, the one or more first avoidance holes are configured to avoid electrodes of the cells, the insulation plate has two sides opposite to each other along the first direction; and
positioning brackets disposed on a side of the insulation plate away from the installation surface, each of the positioning brackets is provided with a plurality of second avoidance holes at positions corresponding to the one or more first avoidance holes, the plurality of second avoidance holes are configured to penetrate through the positioning brackets, the positioning brackets extend in the first direction to the sides of the insulation plate, and each of the positioning brackets are configured to form a blocking portion on one of the sides of the insulation plate to block the connecting assemblies and the end plates.

In a second aspect, embodiments of the invention provide a wiring harness integration assembly for a battery module, and the wiring harness integration assembly includes:
the bracket assembly as described above;
the connecting assemblies disposed on the installation surface of the insulation plate in the bracket assembly, and the connecting assemblies are configured to be in electrical connection with electrodes of the cells in the battery module; and
an acquisition wiring harness disposed on the installation surface of the insulation plate, and the acquisition wiring harness is electrically connected to the connecting assemblies.

In a third aspect, embodiments of the invention provide a battery module, which includes:
two end plates disposed in parallel along a first direction;
a plurality of cells disposed in parallel between the two end plates; and
the above wiring harness integration assembly, the electrodes of the plurality of cells pass through the plurality of first avoidance holes and the plurality of second avoidance holes in the wiring harness integration assembly, and the electrodes are electrically connected to the connecting assemblies in the wiring harness integration assembly; and
the blocking portion of each of the positioning brackets in the wiring harness integration assembly is disposed between one of the end plates and the first connecting members of the connecting assemblies.

### BENEFICIAL EFFECTS

Advantageous effects of the invention are as follows:
The bracket assembly provided in the invention includes an insulation plate and positioning brackets. The insulation plate has an installation surface. The installation surface is configured to install the connecting assemblies. The insulation plate is provided with a plurality of first avoidance holes, and the plurality of first avoidance holes are configured to penetrate through the installation surface. The plurality of first avoidance holes are disposed to avoid electrodes of the cells. The insulation plate has two opposite sides along the first direction. The positioning brackets are disposed on a side of the insulation plate away from the insulation plate. Each of the positioning brackets is provided with a plurality of second avoidance holes at positions corresponding to the plurality of first avoidance holes. The plurality of second avoidance holes are configured to penetrate through the positioning brackets. The positioning brackets extend in the first direction to the sides of the insulation plate, and each of the positioning brackets forms a blocking portion on one of the sides of the insulation plate for blocking the connecting assemblies and the end plates. According to the invention, the positioning bracket extends to the side of the insulation plate, and the blocking portion is formed on the corresponding side, so that when assembling the battery module, the blocking portion formed by the positioning bracket can separate the connecting assembly on the bracket assembly from the end plate in the battery module, thereby increasing the electrical gap and creepage distance between the connecting assembly and the end plate, thereby improving the overall electrical safety of the battery module.

### BRIEF DESCRIPTION OF THE DRAWINGS

FIG. 1 is a schematic structural diagram of a wiring harness integration assembly according to embodiments of the invention.
FIG. 2 is an enlarged schematic diagram of region A in FIG. 1 according to embodiments of the invention.
FIG. 3 is a schematic structural diagram of a positioning bracket according to embodiments of the invention.
FIG. 4 is schematic structural diagram of a battery module according to embodiments of the invention.
FIG. 5 is an enlarged structural diagram of region B in FIG. 4 according to embodiments of the invention.
FIG. 6 is an enlarged structural diagram of region C in FIG. 4 according to embodiments of the invention.

### List of reference signs:

10. battery module;
100, wiring harness integration assembly; 110, bracket assembly; 111, insulation plate; 1111, installation surface; 1112, first avoidance hole; 1112a, positioning avoidance hole; 1113, side; 1114, positioning hole; 1115, identification area; 112, positioning bracket; 1121, second avoidance hole; 1122, blocking portion; 1123, first positioning portion; 1124, second positioning portion; 120, connecting assembly; 121, first connecting member; 122, second connecting member; 130, acquisition wiring harness; X, first direction; Y, second direction;
200, cell;
300, end plate.

### DETAILED DESCRIPTION

In the description of the invention, unless specifically defined or restricted otherwise, terms such as "interconnect", "connect" should be broadly construed, for example, it may be a fixed connection, or a detachable connection; it may be a mechanical connection or an electrical connection; it may be either a direct connection or an indirect connection through an intermediate medium, or it may be an internal communication between two units or an interaction between two units. For a person skilled in the art, the specific meaning of the above terms in the invention may be understood according to specific situations thereof.

In the description of the invention, unless specified and limited otherwise, a first feature "on" or "under" a second feature may include direct contact of the first feature and the second feature, and it may also be included that the first feature and the second feature are not in direct contact but are contacted by additional features between them. Moreover, the first feature "on", "above" and "upper" the second feature includes the first feature directly above and obliquely upward the second feature, or merely indicates that a level of the first feature is higher than a level of the second feature. The first feature "lower", "below" and "under" the second feature includes the first feature directly below and obliquely downward the second feature, or merely indicates that a level of the first feature is less than a level of the second feature.

Embodiments of the invention provide a bracket assembly, a wiring harness integration assembly, and a battery module, which are described in detail below. It should be noted that the order in which the following embodiments are described does not limit the preferred order of the embodiments.

Firstly, embodiments of the invention provide a bracket assembly for installing a battery module. The battery module includes two end plates that are disposed opposite to each other along a first direction, and cells and connecting assemblies electrically connected to each other, wherein the cells are disposed between the two end plates. The first direction is an arrangement direction of a plurality of cells in the battery module. When the cells in the battery module are connected in series or in parallel, and signals such as voltage or temperature of the battery module are collected, it is necessary to provide a bracket assembly above the cells, so as to facilitate the installation of the connecting assemblies for connecting the cells and the acquisition wiring harness.

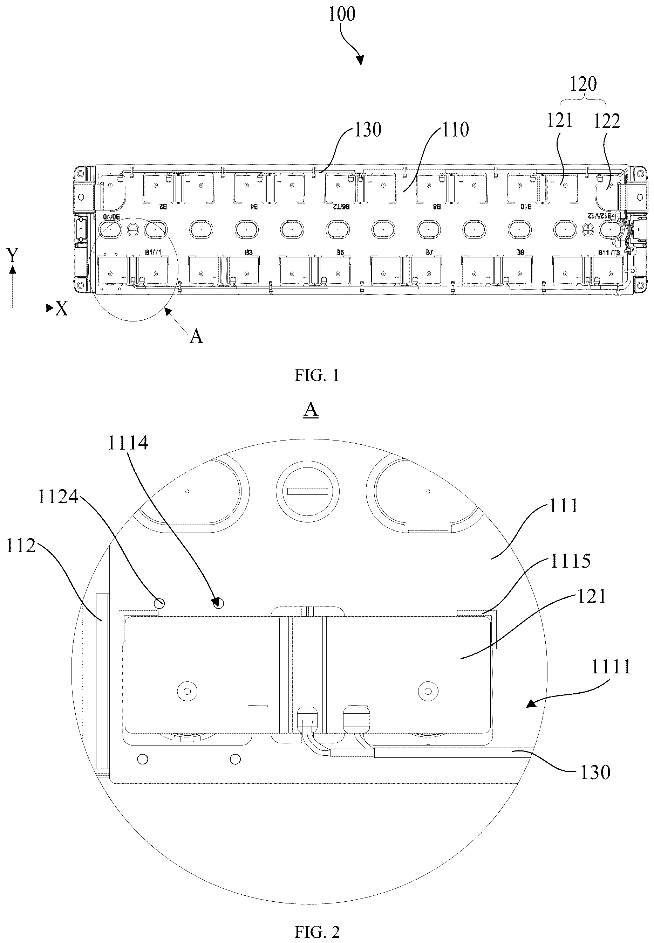

As shown in FIGs. 1 and 2, the bracket assembly 110 includes an insulation plate 111. The insulation plate 111 has an installation surface 1111 for installing connecting assemblies 120. The connecting assemblies 120 are used for connecting a plurality of cells 200 in the battery module 10 in series or in parallel. The insulation plate 111 is provided with a plurality of first avoidance holes 1112, and the plurality of first avoidance holes 1112 penetrate through the installation surface 1111, that is, the first avoidance holes 1112 are through holes.

The first avoidance holes 1112 are used to avoid the electrodes of the cells 200 in the battery module 10. The insulation plate 111 has two opposite sides 1113 along the first direction X, that is, when the bracket assembly 110 is installed above the cells 200 of the battery module 10, the first avoidance holes 1112 correspond to the electrodes of the cells 200. The distribution directions of the two sides 1113 of the insulation plate 111 are consistent with the distribution directions of the two end plates 300 in the battery module 10, and the electrodes of the cells 200 pass through the corresponding first avoidance holes 1112, so as to facilitate electrical connection between the connecting assemblies 120 and the cells 200.

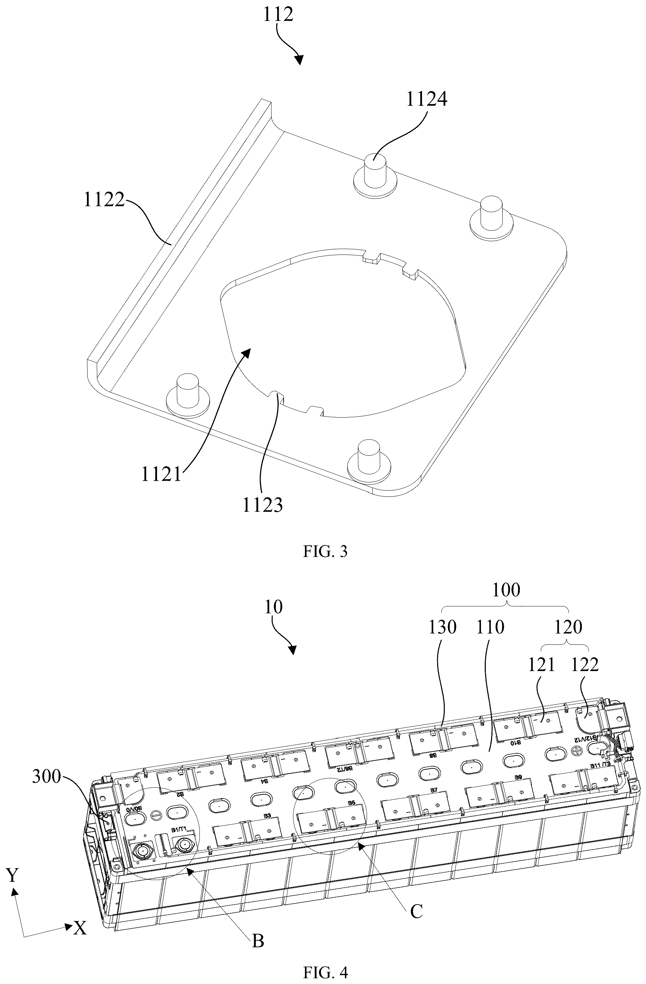

As shown in FIGs. 2 and 3, the bracket assembly 110 includes a positioning bracket 112. The positioning bracket 112 is disposed on a side of the insulation plate 111 away from the installation surface 1111. The positioning bracket 112 can not only support the insulation plate 111 to some extent, but also position the insulation plate 111, so as to facilitate installation of the insulation plate 111 and the positioning bracket 112, thereby facilitating assembly of the bracket assembly 110 in the battery module 10. The positioning bracket 112 is formed with a plurality of second avoidance holes 1121 at positions corresponding to the first avoidance holes 1112, and the second avoidance holes 1121penetrate through the positioning bracket 112. That is, when the bracket assembly 110 is installed above the cells 200 of the battery module 10, the second avoidance holes 1121 correspond to the electrodes of the cells 200, and the electrodes of the cells 200 sequentially pass through the corresponding second avoidance holes 1121 and the first avoidance holes 1112, so as to facilitate electrical connection between the connecting assemblies 120 and the cells 200.

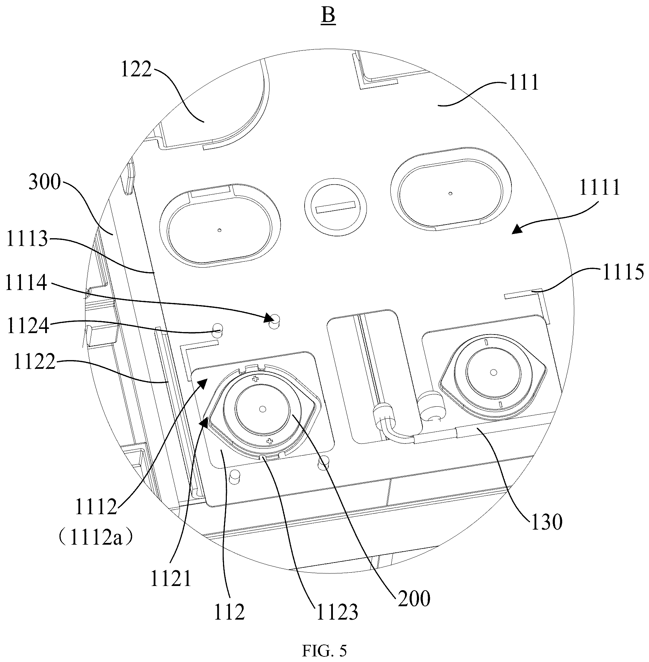

Herein, as shown in FIG. 5, the positioning bracket 112 extends along the first direction X to the side 1113 of the insulation plate 111, and the positioning bracket 112 forms a blocking portion 1122 on the side 1113 of the insulation plate 111 to block the connecting assembly 120 from the end plate 300, that is, the positioning bracket 112 forms a bent angle at the side 1113 of the insulation plate 111, and partially surrounds the side 1113 of the positioning bracket 112.

When assembling the battery module 10, an end plate 300 is provided at a position adjacent to the side 1113 of the insulation plate 111, and connecting assemblies 120 are disposed on the installation surface 1111 of the insulation plate 111. The connecting assembly 120 is used for electrically connecting with the cells 200 in the battery module 10, so that electrical safety problems may occur between the edge of the connection assembly 120 adjacent to the side 1113 of the insulating plate 111 and the end plate 300. By forming the blocking portion 1122 on the side 1113 of the insulation plate 111, the blocking portion 1122 separates the connecting assembly 120 from the end plate 300, so that the electrical gap between the connecting assembly 120 and the end plate 300 needs to bypass the blocking portion 1122 in space, while the creepage distance between the connecting assembly 120 and the end plate 300 needs to bypass the blocking portion 1122 along the surface of the blocking portion 1122. That is, the arrangement of the blocking portion 1122 can effectively increase the electrical gap and creepage distance between the connecting assembly 120 and the end plate 300, thereby improving the overall electrical safety of the battery module 10.

It should be noted that the positions of the connecting assemblies 120 on the insulation plate 111 are related to the arrangement of the plurality of cells 200 in the battery module 10. Accordingly, the position at which the blocking portion 1122 of the positioning bracket 112 is formed is adjusted in accordance with the relative positions of the connecting assembly 120 and the end plate 300 of the battery module 10, so as to ensure that the blocking portion 1122 of the positioning bracket 112 can effectively isolate the edge of the end plate 300 of the battery module 10 from the corresponding connecting assembly 120.

In some embodiments of the invention, the bracket assembly 110 includes an insulation plate 111 and connecting assemblies 120. The insulation plate 111 has an installation surface 1111, which is used to install the connecting assemblies 120. The insulation plate 111 is formed with first avoiding holes 1112, and the first avoiding holes 1112 are used for avoiding electrodes of the cells 200. The insulation plate 111 has two opposite sides 1113 along the first direction X. The positioning bracket 112 is disposed on a side of the insulation plate 111 away from the installation surface 1111, and the positioning bracket 112 is formed with a plurality of second avoidance holes 1121 at positions corresponding to the first avoidance holes 1112. The positioning bracket 112 extends along the first direction X to the side 1113 of the insulation plate 111, and forms a blocking portion 1122 on the side 1113 of the insulation plate 111 to block the connecting assembly 120 from the end plate 300. In the invention, the positioning bracket 112 extends to the side 1113 of the insulation plate 111, and the blocking portion 1122 is formed on the corresponding side 1113, so that when assembling the battery module 10, the blocking portion 1122 formed by the positioning bracket 112 can separate the connecting assembly 120 on the bracket assembly 110 from the end plate 300 in the battery module 10, thereby increasing the electrical gap and creepage distance between the connecting assembly 120 and the end plate 300, thereby improving the overall electrical safety of the battery module 10.

Alternatively, as shown in FIG. 4, the inner wall of the second avoidance hole 1121 is convexly provided with a plurality of first positioning portions 1123, and the first positioning portions 1123 are configured to abut against the side walls of the electrodes of the cells 200 in the battery module 10. That is, when assembling the battery module 10, the positioning brackets 112 are directly sleeved on the electrodes of the corresponding cells 200 in the battery module 10, so that the electrodes of the cells 200 pass through the corresponding second avoidance holes 1121. The first positioning portions 1123 protruding from the inner wall of the second avoidance hole 1121 allows for accurate positioning of the positioning brackets 112 and the corresponding battery cells 200, thereby facilitating accurate installation of the insulation plate 111 and further facilitating effective welding of the connecting assemblies 120 and the electrode of the cells 200.

In addition, the arrangement of the first positioning portions 1123 make it possible to form a gap between the electrode of the cell 200 and the inner wall of the second avoidance hole 1121, which is helpful to the installation of the positioning bracket 112, but is helpful to the heat conduction between the cell 200 and the connecting assembly 120, thereby contributing to improving the accuracy of the temperature signal monitoring by the acquisition wiring harness 130 in the battery module 10.

In some embodiments, the inner wall of the second avoidance hole 1121 is convexly provided with a plurality of first positioning portions 1123, which are disposed at intervals along a circumferential direction of the inner wall of the second avoidance holes 1121. By providing a plurality of first positioning portions 1123 on the inner wall of the second avoidance hole 1121, there are a plurality of contact points between the positioning bracket 112 and the electrode of the corresponding cell 200 along the circumferential direction of the electrode, thereby improving the accuracy and stability of the installation of the positioning bracket 112 and the cell 200.

The plurality of the first positioning portions 1123 can be distributed circumferentially along the inner wall of the second avoidance hole 1121 on both opposite sides of the inner wall of the second avoidance hole 1121, or can also be evenly distributed circumferentially along the inner wall of the second avoidance hole 1121. The specific distribution can be adjusted according to the installation requirements of the positioning brackets 112 and the cells 200 in the battery module 10 and the specific structure of the electrodes of the cells 200, and is not particularly limited herein.

In other embodiments, the orthographic projection of the second avoidance hole 1121 of the positioning bracket 112 on the insulation plate 111 is within in the first avoidance hole 1112, i.e., the size of the second avoidance hole 1121 is less than the size of the first avoidance hole 1112. In this way, after the electrodes of the cells 200 pass through the second avoidance holes 1121 and are positioned and assembled with the positioning brackets 112, the electrodes of the cells 200 can smoothly pass through the first avoidance holes 1112 on the insulation plate 111, so as to prevent the insulation plate 111 from interfering with the assembly of the bracket assemblies 110 and the cells 200.

Alternatively, the side of the positioning bracket 112 facing the insulation plate 111 is convexly provided with a plurality of second positioning portions 1124. The insulation plate 111 is formed with a plurality of positioning holes 1114 at positions corresponding to the second positioning portions 1124. The second positioning portions 1124 are inserted into the positioning holes 1114 to connect the positioning brackets 112 to the insulation plate 111. That is, when the insulation plate 111 is assembled with the positioning brackets 112, the positioning holes 1114 on the insulation plate 111 are aligned with the second positioning portions 1124 on the positioning bracket 112, so that the accurate installation of the insulating plate 111 on the positioning brackets 112 can be realized through mutual cooperation of the positioning holes 1114 and the second positioning portions 1124, thereby realizing the accurate positioning of the insulation plate 111 and the cells 200 in the battery module 10.

The second positioning portions 1124 can be heat rivet posts, that is, after the second positioning portions 1124 on the positioning bracket 112 are inserted into the positioning holes 1114 on the insulation plate 111, the second positioning portions 1124 can be fixedly connected to the insulation plate 111 by heating, thereby ensuring overall structural stability of the bracket assembly 110.

In some embodiments, one side of the positioning bracket 112 facing the insulation plate 111 is provided with a plurality of second positioning portions 1124, and the second positioning portions 1124 are disposed at intervals along the circumferential direction of the inner walls of the second avoidance holes 1121. The insulation plate 111 is provided with a plurality of a plurality of positioning holes 1114, and each of the positioning holes 1114 is disposed in one-to-one correspondence with each of the second positioning portions 1124. Through the mutual cooperation of the plurality of second positioning portions 1124 and the plurality of positioning holes 1114, the assembly accuracy between the insulating plate 111 and the positioning brackets 112 can be further improved. At the same time, the stability of the insulation plate 111 with respect to the positioning brackets 112 can be improved, thereby avoiding rotation of the insulation plate 111 around the second positioning portions 1124 on the positioning brackets 112 during installation.

The plurality of the second positioning portions 1124 and the plurality of the positioning holes 1114 can be correspondingly distributed on opposite sides of the second avoidance holes 1121 and the first avoidance holes 1112, respectively, and can also be evenly distributed along the circumferential direction of the inner walls of the second avoidance holes 1121 and the first avoidance holes 1112, respectively. The specific distribution can be designed and adjusted according to the connection requirements of the positioning brackets 112 and the insulation plate 111, as long as the connection accuracy and stability between the positioning brackets 112 and the insulating plate 111 are ensured, which is not particularly limited herein.

Alternatively, the insulation plate 111 is provided with a plurality of first avoidance holes 1112. In the first direction X, the first avoidance holes 1112 adjacent to any one of the side 1113 are positioning avoidance holes 1112a. The positioning brackets 112 are disposed in correspondence with the positioning avoidance holes 1112a, and the blocking portions 1122 are formed on the corresponding side 1113. In other words, the positioning brackets 112 are not disposed on the entire surface of the insulation plate 111, but are only disposed at the edges of the insulation plate 111 and are disposed corresponding to the first avoidance holes 1112 on the insulation plate 111 adjacent to any one of sides 1113.

This arrangement can not only realize positioning and assembly of the bracket assemblies 110 and the cells 200 in the battery module 10, but also avoid electrical safety problems between the edges of the connecting assemblies 120 and the end plates 300. Meanwhile, it can also reduce the overall weight of the bracket assembly 110 and the battery module 10, improve the overall space utilization rate of the battery module 10, and reduce the manufacturing cost of the battery module 10.

In some embodiments, the bracket assembly 110 includes two positioning brackets 112, which are disposed in parallel along the first direction X and respectively corresponding to the corresponding positioning avoidance holes 1112a. Each of the two positioning brackets 112 forms a blocking portion 1122 on the corresponding side 1113. That is, the two positioning brackets 112 are respectively disposed on opposite edges of the insulation plate 111, and correspond to the first avoidance holes 1112 of the insulation plate 111 that are respectively close to the two side 1113.

During assembly of the battery module 10, the battery module 10 has two opposite end plates 300 in the first direction X. By providing two positioning brackets 112, the electrical safety problems between the edges of the connecting assemblies 120 and the end plates 300 can be further avoided, thereby improving the overall performance stability of the battery module 10.

The two positioning brackets 112 can be disposed at intervals along the first direction X. In this way, even if the number of the cells 200 in the battery module 10 increases and the length of the corresponding insulation plate 111 in the first direction X increases, the structure of the positioning brackets 112 can be kept unchanged, thus making the connection between the positioning brackets 112 and the insulation plate 111 more flexible, so as to meet the design requirements of the battery module 10 with different specifications, and improve the applicability of the bracket assembly 110.

In other embodiments, the two positioning brackets 112 can be connected with each other, that is, the two positioning brackets 112 are integrally formed, or the positioning brackets 112 extend from one side 1113 to the other side 1113 of the insulation plate 111, and the blocking portions 1122 are formed on the two sides 1113, respectively. This structural design can enhance the supporting effect of the positioning brackets 112 on the insulation plate 111, thereby ensuring the installation stability of the connecting assemblies 120 on the insulation plate 111, and further improving the overall structural stability of the battery module 10.

It should be noted that the specific structures and the installation positions of the positioning brackets 112 can be designed and adjusted according to the specific structure of the battery module 10 and the specific installation positions of the connecting assemblies 120 and the end plates 300. It is only necessary to ensure that the blocking portions 1122 of the positioning brackets 112 can effectively isolate the edges of the connecting assemblies 120 from the end plates 300 in the battery module 10, so as not to avoid the electrical safety problems, which is not particularly limited herein.

Alternatively, as shown in FIGs. 2 and 5, the installation surface 1111 of the insulation plate 111 is provided with an identification area 1115 for defining the installation positions of the connecting assemblies 120 on the installation surface 1111. After the bracket assembly 110 is correspondingly installed with the cells 200 in the battery module 10, it is necessary to connect the plurality of cells 200 in the battery module 10 in series and in parallel. In this case, the connecting assembly 120 needs to be welded in correspondence with the plurality of cells 200. By disposing the identification area 1115 on the installation surface 1111 of the insulation plate 111, when the connecting assemblies 120 are placed on the insulation plate 111, the connecting assemblies 120 can be placed directly according to the position of the identification area 1115, which is helpful to improve the positioning accuracy of the connecting assemblies 120 and the insulation plate 111, thereby improving the welding effect between the connecting assemblies 120 and the electrodes of the cells 200 in the battery module 10.

The identification area 1115 can be formed by directly engraving on the installation surface 1111 of the insulation plate 111, or by forming a convex portion on the installation surface 1111 of the insulation plate 111, so as to define the installation positions of the connecting assemblies 120 within the area surrounded by the identification area 1115, thereby realizing quick installation of the connecting assemblies 120.

It should be noted that the specific structure and shape of the identification area 1115 can be designed and adjusted according to the distribution and connection mode of the cells 200 in the battery module 10, the specific sizes of the cells 200, and the specific structures of the connecting assemblies 120. It is only necessary to ensure that the arrangement of the identification area 1115 can effectively improve the positioning accuracy of the connecting assemblies 120 and the insulation plate 111, which is not particularly limited herein.

Secondly, embodiments of the invention further provide a wiring harness integration assembly, which includes a bracket assembly. The specific structure of the bracket assembly refers to the foregoing embodiments. Since the wiring harness integration assembly adopts all technical solutions of all the foregoing embodiments, it has at least all beneficial effects brought by the technical solutions of the foregoing embodiments, which will not be described herein again.

As shown in FIGs. 1 and 2, the wiring harness integration assembly 100 includes a bracket assembly 110, connecting assemblies 120, and an acquisition wiring harness 130. The connecting assemblies 120 are installed on the installation surface 1111 of the insulation plate 111 in the bracket assembly 110, and the connecting assemblies 120 are disposed corresponding to the first avoidance holes 1112 on the installation surface 1111 and the second avoidance holes 1121 of the positioning brackets 112. The connecting assemblies 120 are used to electrically connecting to the electrodes of the cells 200 in the battery module 10. The acquisition wiring harness 130 is disposed on the installation surface 1111 of the insulation plate 111 for electrically connecting to the electrodes of cells 200 in the battery module 10, and the acquisition wiring harness 130 is electrically connected to the connecting assemblies 120. In the invention, the acquisition wiring harness 130 and the connecting assembly 120 are all integrated on the bracket assembly 110, so that high integration of the wiring harness integration assembly 100 in the battery module 10 can be realized, which is convenient for the rapid assembly of the battery module 10.

That is to say, when the wiring harness integration assembly 100 is installed above the cells 200 of the battery module 10, the first avoidance holes 1112 and the second avoidance holes 1121 on the bracket assembly 110 are aligned with the electrodes of the corresponding cells 200, and the electrodes of the cells 200 sequentially pass through the second avoidance holes 1121 and the first avoidance holes 1112. The connecting assemblies 120 are then placed on the bracket assembly 110 and are electrically connected to the cells 200 in the battery module 10, thereby realizing series or parallel connection of the plurality of cells 200 in the battery module 10. Then, the acquisition wiring harness 130 is installed on the installation surface 1111 of the insulation plate 111, and the acquisition wiring harness 130 is fixed by a structure such as a cable tie, and then one end of the acquisition wiring harness 130 is electrically connected to the connecting assemblies 120, so as to monitor signals such as voltage and temperature of the corresponding cells 200 in the battery module 10.

The connecting assembly 120 includes a first connecting member 121 and a second connecting member 122. The first connecting member 121 is used to connect two adjacent cells 200 in the battery module 10 to realize the series connection or parallel connection of the two adjacent cells 200. The second connecting member 122 is used to electrically connect to the output electrodes of the battery module 10. The output electrodes of the battery module 10 are disposed at both ends of the battery module 10 in the alignment direction of the plurality of cells 200, that is, the second connecting members 122 are disposed at both opposite ends of the bracket assembly 110. That is, the first connecting members 121 and the second connecting members 122 disposed at both ends of the bracket assembly 110 are disposed in parallel along the second direction Y, the second direction Y forms an included angle with the first direction X. The second connecting members 122 are used to electrically connect to the external output circuits.

Specifically, the first connecting members 121 are disposed on the side of the blocking portions 1122 in the bracket assembly 110 facing the insulation plate 111, and the second connecting members 122 extend out of the sides 1113 of the insulation plate 111. That is, the blocking portion 1122 in the bracket assembly 110 is located only between the edge of the first connecting member 121 and the end plate 300 of the battery module 10, so as to block the first connecting member 121 from the end plate 300 of the battery module 10, thereby avoiding electrical safety problems between the first connecting member 121 and the end plate 300. The second connecting member 122, as an output end of the wiring harness collecting assembly and the entire battery module 10, needs to be electrically connected to the external output circuits to enable the battery module 10 to be put into use. That is, there is no need to block the second connecting member 122 and the end plate 300 of the battery module 10 through the blocking portion 1122.

It should be noted that the positions of the connecting assemblies 120 on the insulation plate 111 are related to the arrangement of the plurality of cells 200 in the battery module 10. Accordingly, the positions at which the blocking portions 1122 of the positioning brackets 112 are formed are adjusted in accordance with the relative positions of the connecting assemblies 120 and the end plates 300 of the battery module 10, so as to ensure that the blocking portions 1122 of the positioning brackets 112 can effectively isolate the edges of the end plates 300 of the battery module 10 and the corresponding connecting assemblies 120, thereby avoiding the electrical safety problems. In other words, the specific forming positions of the blocking portions 1122 of the positioning brackets 112 in the embodiments of the invention can be designed and adjusted according to actual use requirements, which are not particularly limited herein.

Alternatively, the wiring harness integration assembly 100 further includes an output converter, which is disposed on the bracket assembly 110 and is located at least one end of the bracket assembly 110. The other end of the acquisition wiring harness 130 is connected to an output adapter for electrical connection to an external monitoring device, so as to facilitate transmission of signals such as voltage and temperature monitored by the acquisition wiring harness 130 to the external monitoring device, thereby monitoring and maintaining the operating condition and performance of the battery module 10, and ensuring safe and stable operation of the battery module 10.

A thermistor NTC is provided at one end of a part of the acquisition wiring harness 130 connected to the connecting assembly 120, so as to monitor the temperature of the corresponding cells 200 in the battery module 10. After welding the acquisition wiring harness 130 to the first connecting members 121 or second connecting members 122 in the connecting assembly 120, a layer of UV adhesive can be coated at the joint to enhance the welding strength of the acquisition wiring harness 130 and the connecting assemblies 120, and at the same time, foreign objects can be prevented from contacting the welding area of the acquisition wiring harness 130 and the connecting assemblies 120, thereby improving the connection stability of the acquisition wiring harness 130 and the connecting assemblies 120.

Finally, embodiments of the invention further provide a battery module. The battery module includes a wiring harness integration assembly, and the specific structure of the wiring harness integration assembly refers to the above-described embodiments. Since the battery module adopts all technical solutions of all the foregoing embodiments, it has at least all beneficial effects brought by the technical solutions of the foregoing embodiments, which will not be described herein again.

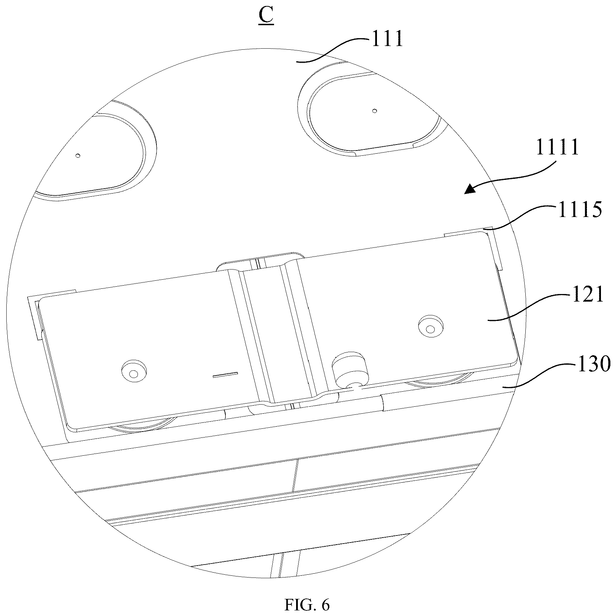

As shown in FIGs. 4 to 6, the battery module 10 includes two end plates 300, a plurality of cells 200, and a wiring harness integration assembly 100. The two end plates 300 are disposed in parallel along the first direction X. The plurality of cells 200 are disposed in parallel between the two end plates 300. The electrodes of the cells 200 pass through the first avoidance holes 1112 and the second avoidance holes 1121 in the wiring harness integration assembly 100. The electrodes of the cells 200 are electrically connected to the connecting assemblies 120 in the wiring harness integration assembly 100. The blocking portions 1122 of the positioning brackets 112 in the wiring harness integration assembly 100 are located between the end plates 300 and the first connecting members 121 of the connecting assemblies 120, so as to avoid the electrical safety problems between the end plates 300 and the first connecting members 121.

That is, during assembly of the battery module 10, firstly, the first avoidance holes 1112 of the insulation plate 111 in the bracket assembly 110 are aligned with the second avoidance holes 1121 of the positioning brackets 112, and the positioning holes 1114 of the insulation plate 111 are aligned with the second positioning portions 1124 of the positioning brackets 112, so that the second positioning portions 1124 pass through the positioning holes 1114, thereby realizing the positioning and installation of the insulation plate 111 and the positioning brackets 112.

Then the connecting assemblies 120 are installed in areas defined by the identification areas 1115 on the insulation plate 111, so as to achieve accurate positioning of the connecting assemblies 120 and the insulation plate 111. Then, the acquisition wiring harness 130 is installed on the installation surface 1111 of the insulation plate 111, and the acquisition wiring harness 130 is fixed by a structure such as a cable tie. At the same time, one end of the acquisition wiring harness 130 is electrically connected to the connecting assemblies 120, and the other end of the acquisition wiring harness 130 is electrically connected to the output converter, thereby realizing assembly of the wiring harness integration assembly 100.

Then, when the wiring harness integration assembly 100 is integrally installed above the cells 200 of the battery module 10, the first avoidance holes 1112 and the second avoidance holes 1121 in the bracket assembly 110 are aligned with the electrodes of the corresponding cells 200, so that the electrodes of the cells 200 sequentially pass through the second avoidance holes 1121 and the first avoidance holes 1112, and the relative positions of the positioning brackets 112 and the electrodes of the cells 200 are defined by using the first positioning portions 1123 on the positioning brackets 112. Meanwhile, the blocking portions 1122 of the positioning brackets 112 are allowed to be located between the end plate 300 and the first connecting member 121 of the connecting assembly 120, so as to separate the end plate 300 from the first connecting member 121, thereby avoiding the electrical safety problems between the end plate 300 and the first connecting member 121. Then, the connecting assemblies 120 are electrically connected to the electrodes of the cells 200 in the battery module 10, so as to achieve series or parallel connection of the plurality of the cells 200 in the battery module 10, thereby achieving monitoring signals such as the voltage and the temperature of the corresponding cells 200 in the battery module 10.

In the invention, the positioning brackets 112 in the bracket assembly 110 extend to the sides 1113 of the insulation plate 111, and the blocking portions 1122 are formed on the corresponding sides 1113, so that when the battery module 10 is assembled, the blocking portions 1122 formed by the positioning brackets 112 can separate the first connecting members 121 of the connecting assemblies 120 on the bracket assembly 110 from the end plates 300 in the battery module 10, thereby increasing the electrical gap and creepage distance between the first connecting members 121 and the end plates 300, thereby improving the overall electrical safety of the battery module 10.

## Claims

1. A bracket assembly (110) configured to install a battery module (10), the battery module (10) comprising two end plates (300) disposed opposite to each other along a first direction (X), cells (200) and connecting assemblies (120) electrically connected to the cells (200), and the cells (200) being disposed between the two end plates (300);
wherein the bracket assembly (110) comprises:
an insulation plate (111) having an installation surface (1111) configured to install the connecting assemblies (120), the insulation plate (111) is provided with one or more first avoidance holes (1112), and the one or more first avoidance holes (1112) are configured to penetrate through the installation surface (1111), the one or more first avoidance holes (1112) are configured to avoid electrodes of the cells (200), and insulation plate (111) has two sides (1113) opposite to each other along the first direction (X); and
positioning brackets (112) disposed on a side of the insulation plate (111) away from the installation surface (1111), each of the positioning brackets (112) is provided with a plurality of second avoidance holes (1121) at positions corresponding to the one or more first avoidance holes (1112), the plurality of second avoidance holes (1121) are configured to penetrate through the positioning brackets (112), the positioning brackets (112) are configured to extend in the first direction (X) to the two sides (1113) of the insulation plate (111), and each of the positioning brackets (112) is configured to form a blocking portion (1122) on one of the two sides (1113) of the insulation plate (111) to block the connecting assemblies (120) and the end plates (300).

2. The bracket assembly (110) according to claim 1, wherein an inner wall of each of the plurality of second avoidance holes (1121) is convexly formed with a plurality of first positioning portions (1123), and the plurality of first positioning portions (1123) are disposed to abut against side walls of one of the electrode of the cells (200) in the battery module (10).

3. The bracket assembly (110) according to claim 2, wherein the inner wall of each of the plurality of second avoidance holes (1121) is convexly formed with a plurality of first positioning portions (1123), and the plurality of first positioning portions (1123) are disposed at intervals along a circumferential direction of the inner wall of each of the plurality of second avoidance holes (1121).

4. The bracket assembly (110) according to claim 1, wherein a side of each of the positioning brackets (112) facing the insulation plate (111) is convexly formed with one or more second positioning portions (1124), the insulation plate (111) is provided with a plurality of positioning holes (1114) at positions corresponding to the one or more second positioning portions (1124), and the one or more second positioning portions (1124) are configured to be inserted into the plurality of positioning holes (1114) to connect the positioning brackets (112) with the insulation plate (111).

5. The bracket assembly (110) according to claim 4, wherein the one or more second positioning portions comprise a plurality of second positioning portions (1124), the plurality of second positioning portions (1124) are disposed at intervals along a circumferential direction of the inner wall of each of the second avoidance holes (1121), the insulation plate (111) is provided with the plurality of the positioning holes (1114), and each of the plurality of the positioning holes (1114) is disposed in one-to-one correspondence with each of the plurality of the second positioning portions (1124).

6. The bracket assembly (110) according to any one of claims 1 to 5, wherein the one or more first avoidance holes comprise a plurality of first avoidance holes (1112), and in the first direction (X), ones of the plurality of first avoidance holes (1112) adjacent to any one of the two sides (1113) are positioning avoidance holes (1112a), the positioning brackets (112) are disposed in correspondence with the positioning avoidance holes (1112a), and the blocking portion (1122) is defined on a corresponding one of the two sides (1113).

7. The bracket assembly (110) according to claim 6, wherein the bracket assembly (110) comprises two of the positioning brackets (112) disposed in parallel along the first direction (X) and respectively corresponding to the positioning avoidance holes (1112a), and each of the positioning brackets (112) is configured to define the blocking portion (1122) on the corresponding one of the two sides (1113).

8. The bracket assembly (110) according to any one of claims 1 to 5, wherein the installation surface (1111) is provided with identification areas (1115), the identification areas (1115) are configured to define installation positions of the connecting assemblies (120) on the installation surface (1111).

9. The bracket assembly (110) according to any one of claims 1 to 5, wherein an orthographic projection of each of the plurality of second avoidance holes (1121) on one of the positioning brackets (112) on the insulation plate (111) is within each of the plurality of first avoidance holes (1112).

10. The bracket assembly (110) according to claim 4 or 5, wherein the plurality of second positioning portions (1124) are heat rivet posts.

11. The bracket assembly (110) according to claim 7, wherein the two of the positioning brackets (112) are spaced apart in the first direction (X).

12. The bracket assembly (110) according to any one of claims 1 to 5, wherein the positioning brackets (112) are configured to extend from one of the sides (1113) of the insulation plate (111) to another one of the two sides (1113) and form the blocking portion (1122) on the two sides (1113), respectively.

13. A wiring harness integration assembly (100) for a battery module (10), comprising:
the bracket assembly (110) according to any one of claims 1 to 12;
the connecting assemblies (120) disposed on the installation surface (1111) of the insulation plate (111) in the bracket assembly (110), and configured to be in electrical connection with the electrodes of the cells (200) in the battery module (10); and
an acquisition wiring harness (130) disposed on the installation surface (1111) of the insulation plate (111), and being electrically connected to the connecting assemblies (120).

14. The wiring harness integration assembly (100) according to claim 13, wherein each of the connecting assemblies (120) comprises:
first connecting members (121) configured to connect two adjacent ones of the cells (200) in the battery module (10), and disposed on one side of the blocking portion (1122) in the bracket assembly (110) facing the insulation plate (111); and
second connecting members (122) configured to be electrically connected to an output electrode of the battery module (10) and to protrude from the two sides (1113) of the insulation plate (111).

15. A battery module (10) comprising:
two end plates (300) disposed in parallel along a first direction (X);
a plurality of cells (200) disposed in parallel between the two end plates (300); and
the wiring harness integration assembly (100) according to claim 13 or 14, the electrodes of the cells (200) passing through the plurality of first avoidance holes (1112) and the plurality of second avoidance holes (1121) in the wiring harness integration assembly (100), and the electrodes being electrically connected to the connecting assemblies (120) in the wiring harness integration assembly (100); and
wherein the blocking portion (1122) of each of the positioning brackets (112) in the wiring harness integration assembly (100) is disposed between one of the end plates (300) and the first connecting members (121) of the connecting assemblies (120).
